# EUROPEAN PATENT APPLICATION

(11) **EP 2 088 600 A1**
(43) Date of publication of application: **12.08.2009**
(21) Application number: 08002275.9
(22) Date of filing: 07.02.2008
(51) Int. Cl.: G21C 3/324, G21C 3/326

(54) **Core of a boiling water reactor**

(71) Applicant: Hitachi-GE Nuclear Energy, Ltd., Hitachi-shi Ibaraki 317-0073 (JP)
(72) Inventor: Miwa, Junichi, Tokyo 100-8220 (JP); Takeda, Renzo, Tokyo 100-8220 (JP); Mitsuyasu, Takeshi, Tokyo 100-8220 (JP); Moriya, Kumiaki, Ibaraki 317-00773 (JP)
(74) Representative: MERH-IP Matias Erny Reichl Hoffmann

(57) **Abstract**

Fuel assemblies (5) composing a core (10) of a boiling water reactor include a plurality of fuel rods (6A, 6B, 6C, 6D, 6E) including uranium but not including gadolinium and a plurality of fuel rods (6F, 6G, 6H) including uranium and gadolinium. A mean thickness of a channel box (7) surrounding these fuel rods (6) is 2.6 mm and a ratio of an inner width of the channel box (7) to a width of a fuel assembly lattice (15) is 0.863. A mean uranium enrichment of the fuel assemblies (5) in a transverse section is 4.73 wt%. An uranium weight included in a unit volume of the core region is 2.4 kg/l. The reactor power can be improved from that of a current BWR/5 by 20 %. The core of a boiling water reactor can be realized the increase power output by keeping a thermal margin on the same level as that of a BWR in operation at present and make cooling of each of fuel rods in fuel assemblies during increase power output more uniform.

## Description

### BACKGROUND OF THE INVENTION

The present invention relates to a core of a boiling water reactor, and more particularly, to a core of a boiling water reactor capable of increasing power output by keeping the thermal margin on the same level as that of the BWR being operated at present.

A core of a boiling water reactor (hereinafter, referred to as a BWR core) using light water as a neutron moderator and as a coolant includes many fuel assemblies and control rods inserted between the adjacent fuel assemblies. The fuel assemblies have a fuel bundle formed so as to bundle a plurality of fuel rods and a water rod. The fuel bundle keeps the mutual gaps of the fuel rods at a predetermined interval by spacers. The upper and lower end portions of each of the fuel rods are supported by an upper and a lower tie-plate. The fuel bundle is inserted into a channel box and is surrounded by the channel box. The upper end portion of the channel box is attached to the upper tie-plate and the lower end portion thereof is fit into the lower tie-plate. The fuel assembly lattice, in the transverse section thereof, is divided into the fuel rod lattice region and intra-water rod region (saturated water region) which exist inside the channel box and the gap water region (saturated water region) existing outside the channel box. In the fuel rod lattice region, voids are generated due to heat transfer from the fuel rods. However, in the gap water region, no voids occur. Therefore, due to the pressure difference between the inside and the outside of the channel box, force for pressing outward the channel box occurs.

In recent years, in the nuclear power generation, the reduction in the power generation cost has been an important subject. The countermeasure to reduce the fuel cycle cost due to an increase in the amount of the generation of the plutonium during operation of the nuclear reactor and the power generation cost due to an increase in the continuous operation term of the plant is described in Japanese Patent Laid-open 2004-301831. The countermeasure described in Japanese Patent Laid-open 2004-301831, that is, the countermeasure for increasing the fuel inventory of the fuel assemblies is as indicated below. The fuel assembly lattice in the core is made heterogeneous by two regions such as the fuel rod lattice region where the fuel rods are arranged and cooled and the saturated water region (water rod inside region and gap water region) for moderating neutrons. And, at the central part (water rod inside region) of the fuel assembly lattice and at the peripheral part thereof (gap water region), the saturated water region is arranged so as to be centralized, and the cooling water flow region in the fuel rod lattice region is reduced, thus the saturated water region is increased. The neutrons moderated well in the saturated water region reach the fuel rod lattice region and contribute to nuclear fission of nuclear fuel. Furthermore, the fuel inventory for the fuel assembly lattice can be increased because the amount of cooling water in the two-phase flow state including sub-cooling water for cooling the fuel rods can be reduced to a minimum amount necessary to cool the fuel rods.

### SUMMARY OF THE INVENTION

The inventors found a new knowledge that in the fuel assemblies loaded in the BWR core described in Japanese Patent Laid-open 2004-301831, at time of increasing the power output of the nuclear reactor, the fuel rods are not cooled uniformly (it will be described later in detail). Particularly, the inventors found newly that the non-uniformity is increased when core flow rate is increased or the mean void fraction of the core is increased.

An object of the present invention is to provide a core of a boiling water reactor capable of increasing power output by keeping thermal margin on the same level as that of the BWR in operation at present and making the cooling of fuel rods in fuel assemblies during increasing the power output more uniform.

The present invention for accomplishing the above object is **characterized in that** a core for a boiling water reactor is a burner type core of a boiling water reactor which has a ratio of 3 or more of number of fuel assemblies loaded in the core to number of control rods installed in the nuclear reactor and uses an oxide of low enriched uranium having a mean enrichment of the fuel assemblies of 3 wt% to 8 wt% or a mixed oxide having a mean fissile plutonium enrichment of the fuel assemblies of 2 wt% to less than 7 wt%, wherein mean weight of at least one of uranium and plutonium included in an unit volume of a core region is 2.25 to 3.4 kg/l when load of the fuel assemblies having a burnup of 0 into the core is finished and mean thickness of a channel box of the fuel assemblies is 2.10 to 3.55 mm.

In the core of the boiling water reactor in which the mean weight of at least one of uranium and plutonium is 2.25 to 3.4 kg/l when load of the fuel assemblies having a burnup of 0 into the core is finished and the fuel assemblies with the fuel inventory increased are used, since the mean thickness of the channel box is 2.10 mm or more, even if the mean void fraction of the core is increased due to an increase power output, the creep deformation of the channel box directed outward can be suppressed. Therefore, even in the core of the boiling water reactor, the cooling of the fuel rods in the fuel assemblies can be made more uniform. Further, in the reactor core aforementioned in which the mean weight of at least one of uranium and plutonium is 2.25 to 3.4 kg/l when load of the fuel assemblies having a burnup of 0 into the core is finished, the fuel assemblies can be prevented from uplift from the support members (for example, fuel support) thereof because the mean thickness of the channel box is set at 3.55 mm or less.

Further, the above object is accomplished by a core of a boiling water reactor which is a burner type core of a boiling water reactor which has a ratio of 3 or more of number of fuel assemblies loaded in the core to number of control rods installed in the nuclear reactor and uses, as nuclear fuel, an oxide of low enriched uranium having a mean enrichment of the fuel assemblies of 3 wt% to 8 wt% or a mixed oxide having a mean fissile plutonium enrichment of the fuel assemblies of 2 wt% to less than 7 wt%, wherein a ratio of an inner width of a channel box of the fuel assemblies to a width of a fuel assembly lattice is 0.79 to 0.865 and mean thickness of the channel box of the fuel assemblies is 2.10 to 3.55 mm.

The mean thickness of the channel box of the fuel assemblies is desirably 2.55 to 3.55 mm. Since the mean thickness of the channel box is 2.55 mm, the use efficiency of neutrons can be enhanced and furthermore, a surface dose rate of a pipe through which primary cooling water flows can be reduced.

The present invention, with the result that the inventors examined the BWR core made up of a plurality of fuel assemblies to which the countermeasure for increasing the fuel inventory shown in Japanese Patent Laid-open 2004-301831 is applied, was developed to improve a newly found subject. The BWR core is a burner type BWR core which has a ratio of 3 or more of number of fuel assemblies loaded in the core to number of control rods inserted into the core and uses, as a nuclear fuel material, an oxide of low enriched uranium having a mean enrichment of the fuel assemblies of 3 wt% to 8 wt% or a mixed oxide having a mean fissile plutonium enrichment of the fuel assemblies of 2 wt% to less than 7 wt%. In the BWR core, furthermore, mean weight of at least one of uranium and plutonium included in an unit volume of a core region is 2.25 to 3.4 kg/l when load of the fuel assemblies having a burnup of 0 into the core is finished.

Further, the ratio of the inner width of the channel box of the fuel assemblies to the width of the fuel assembly lattice is set to 0.79 to 0.865, so that the rate of the fuel region to fuel assembly lattice can be increased, consequently the fuel inventory can be increased. Namely, when the rate is set to 0.79 to 0.865, the peripheral part (gap water region) of the fuel assembly lattice can be increased and neutrons moderated well in the saturated water region including the gap water region can be diffused more in the fuel rod lattice region. Therefore, the cooling water flow area in the fuel rod lattice region where the two-phase flow including sub-cooling water for cooling the fuel rods runs can be reduced to a minimum region necessary to cool the fuel rods, and the rate of a fuel rod lattice region to a fuel assembly lattice is increased, thus the fuel inventory can be increased.

The present invention aims at the burner type BWR core aforementioned. Hereinafter, examination results of the inventors will be explained.

Further, as an existing nuclear reactor indicated below, a BWR/5 (at a ratio of 4.13 (= 764/185) of number of fuel assemblies loaded in a core to number of control rods installed in the nuclear reactor) having thermal power of 3293 MW (electric power of 1100 MW), 764 fuel assemblies, and 185 control rods is illustrated. The fuel assemblies used in this nuclear reactor are high burnup fuel assemblies (including 74 fuel rods) including fuel rods arranged in 9 rows and 9 columns.

When the increase power output is informed simply in an existing nuclear reactor, the mean thermal power per unit length (W/m) (hereinafter, abbreviated to a mean linear heat rating) obtained by dividing the thermal power (W) of the nuclear reactor by the product (m) of the total number of fuel rods in the core and active fuel length is increased and there is a fear that the heat removal property for the fuel rods may be impaired. To increase the power output without reducing the thermal margin, it is necessary to increase the number of fuel rods per the fuel assembly. As a method for increasing the number of fuel rods, it is desirable to adopt the aforementioned countermeasure for increasing the fuel inventory disclosed in Japanese Patent Laid-open 2004-301831. Namely, the increased unsaturated water region and saturated water region are arranged concentratedly at the central part of the fuel assembly lattice and in the peripheral part thereof, thus the coolant flow area in the fuel rod lattice region positioned between the central part and the peripheral part is reduced. By doing this, the number of fuel rods in the fuel assemblies is increased and the fuel inventory per the fuel assembly is increased.

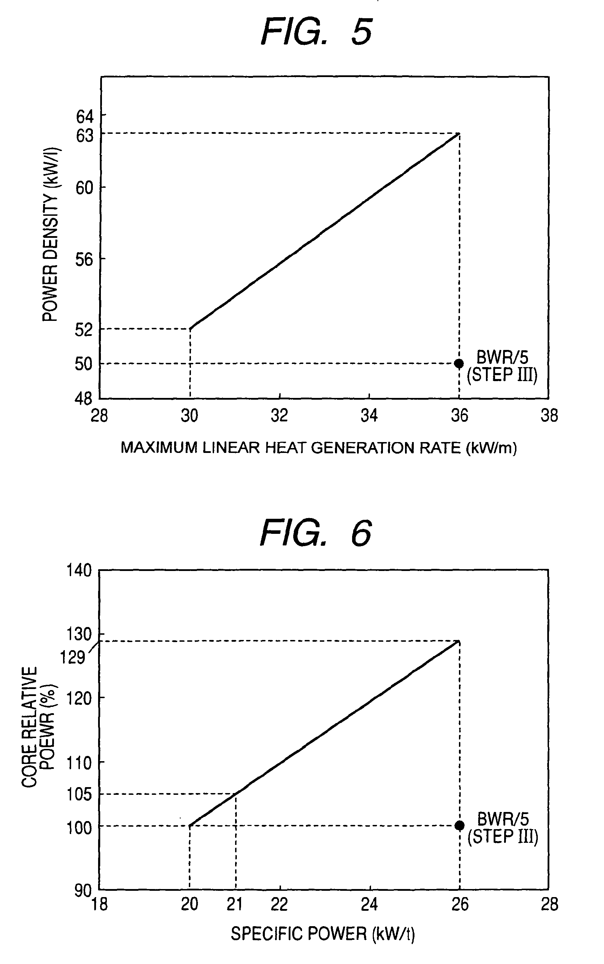

By applying this concept, aiming at the BWR core in which the mean weight of at least one of uranium and plutonium included in the unit volume of the core region is 2.25 to 3.4 kg/l when load of the fuel assemblies having a burnup of 0 into the core is finished, the inventors examined the power density and specific power of the reactor core. The results of examination are shown in FIGs. 5 and 6. The black circles shown in FIGs. 5 and 6 indicate the values of the existing nuclear reactor (BWR/5) illustrated above.

The relationship between the maximum linear heat generation rate and the core heat rating in a BWR core made up of fuel assemblies in which fuel rods are arranged in 12 rows and 12 columns and the fuel inventory is increased is shown in FIG. 5. The fuel region per fuel assembly lattice is increased, and the number of fuel rods per the fuel assembly is increased, thus although the maximum linear heat generation rate is set to 36 kW/m or less of the BWR/5, the power density can be increased than 50 kW/l of the BWR/5 and can be adjusted from 52 kW/l to less than 63 kW/l. When increasing the fuel rods from 12 rows x 12 columns without changing substantially the fuel rod gaps, although the number of fuel rods is increased, the outside diameter of each of the fuel rods becomes smaller. On the other hand, since the thickness of the cladding tube of each of the fuel rods is restricted in its minimum, the cladding tubes cannot be thinned so much. Therefore, the reduction rate of the outside diameter of fuel pellets in the fuel rods becomes smaller at a rate higher than that of the outside diameter of the fuel rods, and the fuel region per the fuel assembly lattice is reduced, and the fuel inventory is reduced. According to the present invention, the increase power output can be attained under the condition that the maximum linear heat generation rate is set to that of the current BWR/5 or less.

The relationship between the specific power and core relative power when the rated power of the current BWR/5 is assumed as 100% is shown in FIG. 6. Even when the power output is increased to 129% by the increase of the fuel inventory, the specific power can be reduced to 26 kW/t of the BWR/5 or less. On the other hand, when the power is increased to 105% necessary at its minimum, the specific power can be set to 21 kW/t. According to the present invention, in such a power increase, the specific power can be made smaller than that of the current BWR/5 and the fission term of nuclear fuel can be made longer than that of the current BWR/5.

The inventors examined an increase power output in a nuclear reactor having a core adopting the countermeasure for increasing the fuel inventory in which the mean weight of at least one of uranium and plutonium included in the unit volume of the core region is 2.25 to 3.4 kg/l when load of the fuel assemblies having a burnup of 0 into the core is finished. As a result, the inventors obtained a new knowledge indicated below. The examination results and new knowledge will be explained below. When the countermeasure for increasing the fuel inventory is adopted, the region of the coolant flow path in the fuel rod lattice region is reduced, so that at time of the increase power output of the nuclear reactor, when the core flow rate is increased or when the mean void fraction of the core is increased, the inventors found that the pressure loss of the fuel assemblies is increased extremely. Such an increase in the pressure loss promotes for the force for expanding outward the channel box to be applied to the channel box. Therefore, the channel box is apt to creep and deform outward. Since the gap between the central part (in the transverse section) of each side wall of the channel box and the fuel rod adjacent thereto is spread, the flow rate of the coolant at this gap is increased, and the distribution of the flow rate of the coolant in the fuel rod lattice region in the fuel assemblies becomes uneven. The inventors, when increasing the power output of the BWR core with the countermeasure for increasing the fuel inventory applied, found a new subject that as mentioned above, the non-uniformity of the flow rate distribution of the coolant in the fuel rod lattice region in the fuel assemblies is increased and the non-uniformity of cooling for each fuel rod is increased.

To realize the increase power output by applying the countermeasure for increasing the fuel inventory, it is necessary to suppress the creep deformation of the channel box directed outward. The inventors examined variously to suppress the creep deformation. As a result of the examination, the inventors found that when the mean thickness of the channel box is 2.10 mm or more, on the similar level to that of a current light water reactor with no countermeasure for increasing the fuel inventory applied, the creep deformation of the channel box directed outward can be suppressed. When using a channel box with a mean thickness of 2.10 mm, it is necessary to reduce the pressure loss of the fuel assemblies to a certain extent. The reduction in the pressure loss can be realized by using a low pressure loss fuel spacer. The low pressure loss fuel spacer can make the lattice member thinner, so that the pressure loss can be reduced. In the low pressure loss fuel spacer, for example, not only the spring member but also the lattice member can be made of Inconel. In the lattice member made of Inconel, the thickness can be decreased and the pressure loss can be reduced.

In fuel assemblies having a channel box with a mean thickness of less than 2.55 mm, by use of the aforementioned low pressure loss fuel spacer, the creep deformation of the channel box can be suppressed to the similar level as that of the current light water reactor. Therefore, the fuel assemblies can cool the fuel rods in the fuel rod lattice more uniformly. To fuel assemblies having a channel box with a mean thickness of 2.55 mm or more, the low pressure loss fuel spacer can be applied.

However, the low pressure loss fuel spacer absorbs many neutrons, thereby reduces the use efficiency of neutrons to nuclear fission. Further, since the elusion quantity of cobalt 59 which is a fertile nuclide of cobalt 58 and cobalt 60 which are radionuclide into the coolant from the low pressure loss fuel spacer is increased, a countermeasure to suppress the elution quantity is necessary for the low pressure loss fuel spacer. The increase in the elusion quantity of the fertile nuclide causes an increase in the surface dose rate of a pipe, such as a recirculation pipe, through which a primary coolant flows. The fuel spacer in which the lattice member is made of a zirconium alloy (for example, zircalloy) can improve the aforementioned subjects caused by the low pressure loss fuel spacer. However, the lattice member made of a zirconium alloy is thicker than the lattice member of the low pressure loss fuel spacer, so that the fuel spacer using the lattice member made of a zirconium alloy is increased in the pressure loss more than the low pressure loss fuel spacer. The fuel spacer using the lattice member made of a zirconium alloy is larger in the pressure loss than the low pressure loss fuel spacer, so that in this specification, for convenience, it is referred to as a high pressure loss fuel spacer.

In fuel assemblies having a channel box with a mean thickness of 2.55 mm or more, even if the high pressure loss fuel spacer is used, the creep deformation of the channel box can be suppressed to the similar level as that of the current light water reactor. That is, the fuel assemblies having a channel box with a mean thickness of 2.55 mm or more can use the high pressure loss fuel spacer, can cool the fuel rods more uniformly, and can increase the use efficiency of neutrons. Furthermore, since the fuel assemblies can reduce the elusion quantity of the fertile nuclide of the radionuclide, the surface dose rate of the pipe through which the primary coolant flows can be reduced, thus the maintenance and inspection work for the pipe is simplified.

As a channel box, a channel box with a uniform thickness and a Thick/Thin channel box with a non-uniform thickness can be used. The Thick/Thin channel box is a square cylinder. The Thick/Thin channel box is a channel box that the thickness of each corner is thicker relatively than the central part of the side wall connecting with the adjacent corner (for example, thicker than the mean thickness by 22%) so as to increase the resisting power to the creep deformation directed outward. In the Thick/Thin channel box, in the axial direction, the thickness at the lower part may be thicker than the thickness at the upper part. For example, the central region of the upper part of the channel box is made thinner than the mean thickness by 51% and the central region of the lower part thereof is made thinner than the mean thickness by 26%. The Thick/Thin channel box having the parts different in the thickness, if the mean thickness thereof is 2.10 mm or more, can suppress the creep deformation directed outward at time of the increase power output and can cool the fuel rods more uniformly. In a channel box having lower resisting power to the creep deformation than that of the Thick/Thin channel box and having a practically uniform thickness, to suppress, at time of the increase power output, the creep deformation of the channel box on the similar level to that of the current light water reactor, it is desirable that the mean thickness is 2.55 mm or more. The channel box having a substantially uniform thickness can be manufactured easier than the Thick/Thin channel box and the time required for manufacture can be shortened.

Further, the inventors, when a channel box with a means thickness of 2.10 mm or more is used, additionally found newly that a new subject of isolation of the fuel assemblies arises. When the aforementioned countermeasure for increasing the fuel inventory is adopted and the coolant flow area in the fuel rod lattice region is reduced, due to an increase in the void fraction by the increase power output and an increase in the core flow rate for reactivity supplement at time of the increase power output, the pressure loss of the fuel assemblies is increased. Such an increase in the pressure loss increases the pressure of the coolant for acting on the lower end face of the channel box. The increase in the pressure causes a new subject of isolating the fuel assemblies from the support member. The inventors examined a countermeasure for the new subject, that is, for preventing the isolation of the fuel assemblies at time of the increase power output. As a result, the inventors, in the fuel assemblies in which the aforementioned countermeasure for increasing the fuel inventory is adopted and the coolant flow area in the fuel rod lattice region is reduced, if the mean thickness of the channel box is 3.55 mm or less, found that also at time of the increase power output, the fuel assemblies can be prevented from isolation.

According to the present invention, the increase power output can be realized with the thermal margin keeping on the same level as that of the BWR in operation at present and the cooling of each of the fuel rods in the fuel assemblies at time of the increase power output can be made more uniform.

### BRIEF DESCRIPTION OF THE DRAWINGS

FIGs. 1A and 1B are structural diagram showing a fuel assembly lattice being used in the BWR core according to Embodiment 1 which is a preferred embodiment of the present invention; FIG. 1A is a horizontal cross sectional view of the fuel assembly lattice, and FIG. 1B is an explanatory drawing showing enrichment and gadolinium concentration of each fuel rod used in the fuel assembly shown in FIG. 1A.
FIG. 2 is a longitudinal cross sectional view showing a nuclear reactor to which the BWR core of Embodiment 1 is applied.
FIG. 3 is a horizontal cross sectional view showing the BWR core of Embodiment 1.
FIGs. 4A and 4B are explanatory drawing showing detailed arrangement of the fuel assemblies in the BWR core of Embodiment 1; FIG. 4A is a plan view showing one cell in which four fuel assemblies are arranged, and FIG. 4B is a sectional view taken along a line A-A of Fig. 4A.
FIG. 5 is a characteristic diagram showing a relationship between maximum linear heat generation rate and power density.
FIG. 6 is a characteristic diagram showing a relationship between specific power and core relative power.
FIG. 7 is a horizontal cross sectional view showing a BWR core according to Embodiment 2 which is another embodiment of the present invention.
FIGs. 8A and 8B are structural diagram showing a fuel assembly lattice being used in the BWR core according to Embodiment 2; FIG. 8A is a horizontal cross sectional view of the fuel assembly lattice, and FIG. 8B is an explanatory drawing showing enrichment and gadolinium concentration of each fuel rod used in the fuel assembly shown in FIG. 8A.
FIGs. 9A and 9B are structural diagram showing a fuel assembly lattice being used in the BWR core according to Embodiment 3 which is another embodiment of the present invention; FIG. 9A is a horizontal cross sectional view of the fuel assembly lattice, and FIG. 9B is an explanatory drawing showing enrichment and gadolinium concentration of each fuel rod used in the fuel assembly shown in FIG. 9A.

### DETAILED DESCRIPTION OF THE PREFERRED EMBODIMENTS

Hereinafter, the embodiments of the present invention will be explained in detail with reference to the accompanying drawings.

### [Embodiment 1]

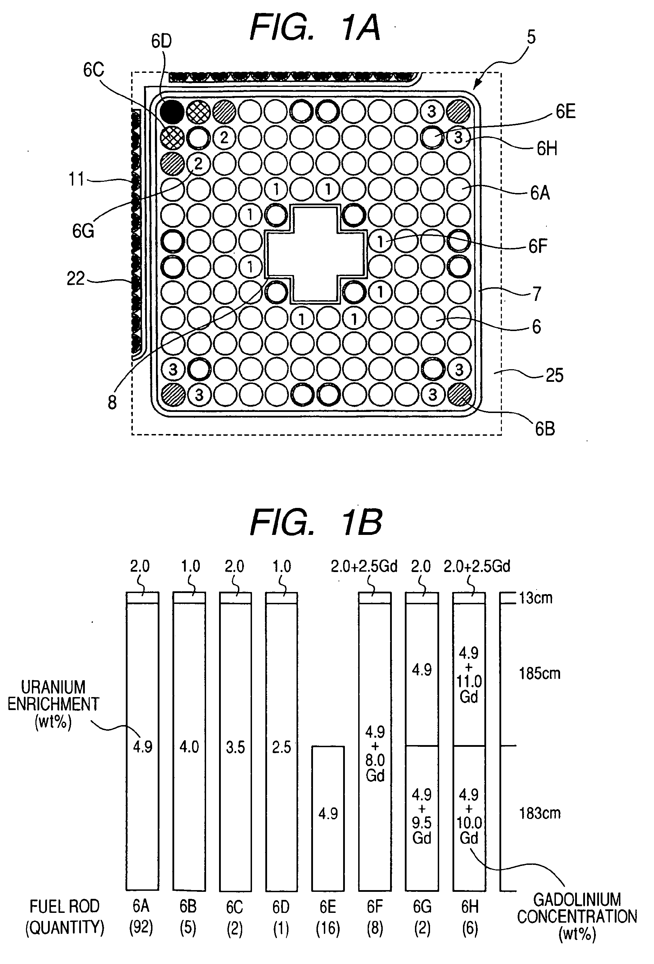

The BWR core of Embodiment 1 which is a preferred embodiment of the present invention will be explained by referring to FIGs. 1A to 4. As a BWR core of the present embodiment, the core of the BWR/5 having electric power of 1320 MWe is illustrated.

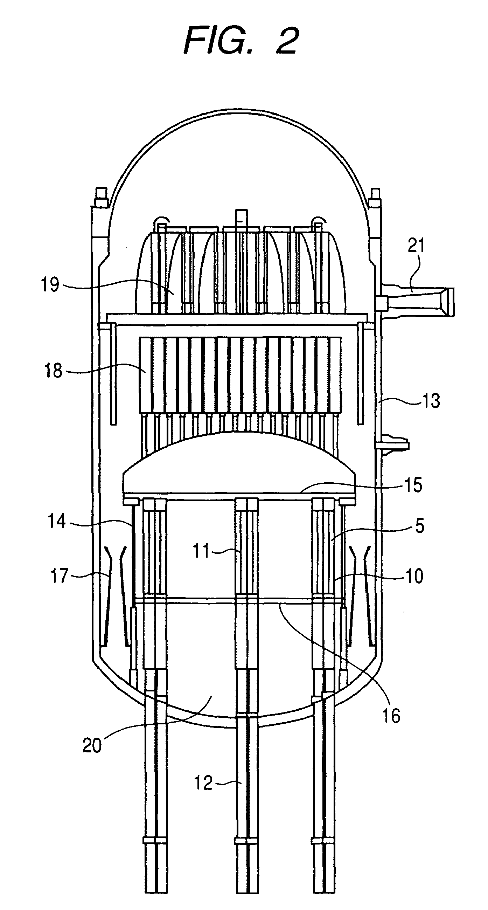

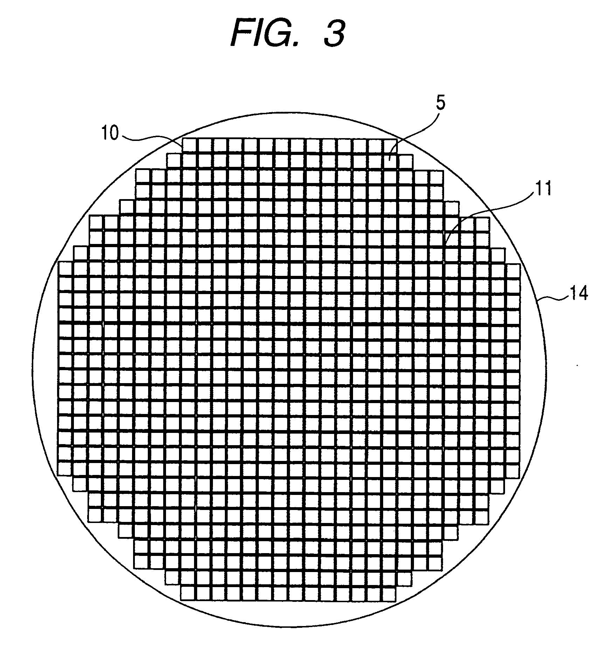

Firstly, the schematic structure of a boiling water nuclear power generation plant (BWR power generation plant) aiming at the BWR/5 to which the BWR core of the present embodiment is applied will be explained. The nuclear reactor which is a main apparatus of the BWR power generation plant has the structure shown in FIG. 2. This nuclear reactor has a reactor pressure vessel 13 with a BWR core (hereinafter, just referred to as a core) 10 formed internally. A core shroud 14 is installed in the reactor pressure vessel 13 and an upper lattice plate 15 and a core support plate 16 are installed on the core shroud 14. A plurality of jet pumps 17 are arranged in an annulus portion formed between the core shroud 14 and the reactor pressure vessel 13. The core 10 is formed in the core shroud 14 and has 764 fuel assemblies 5 and 185 control rods 11 being inserted between the adjacent fuel assemblies 5 (refer to FIG. 3). In the core 10, the ratio of the number of fuel assemblies loaded in the core 10 to the number of control rods installed in the nuclear reactor is 4.13 (= 764/185). Regarding the fuel assemblies 5, the lower end portions thereof are supported by fuel supports (not shown) attached to the core support plate 16 and the upper end portions thereof are held by the upper lattice plate 15. The control rods 11 have a cross-shaped transverse section and are arranged at a rate of one per four fuel assemblies 5. Each blade of the control rods 11 has a plurality of neutron absorbing rods 22 with B₄C filled internally. The control rods 11 are operated by a control rod drive mechanism 12 installed at the bottom of the reactor pressure vessel 13. The reactor power is controlled by adjusting the insertion amount of the control rods 11 into the core 10.

Cooling water (coolant) discharged from the jet pumps 17 is supplied from a lower plenum 20 into each of the fuel assemblies 5. The cooling water is heated and vaporized by heat generated by nuclear fission of nuclear fuel in the fuel assemblies 5. The generated steam is separated moisture by a steam separator 18 and a steam dryer 19 which are installed above the reactor core 10 in the reactor pressure vessel 13. Thereafter, the steam is supplied to a turbine (not shown) through a main steam pipe 21 to rotate the turbine. The steam exhausted from the turbine is condensed by a condenser (not shown) and water generated by the condensation of steam is returned into the reactor pressure vessel 13 through a feed water pipe (not shown).

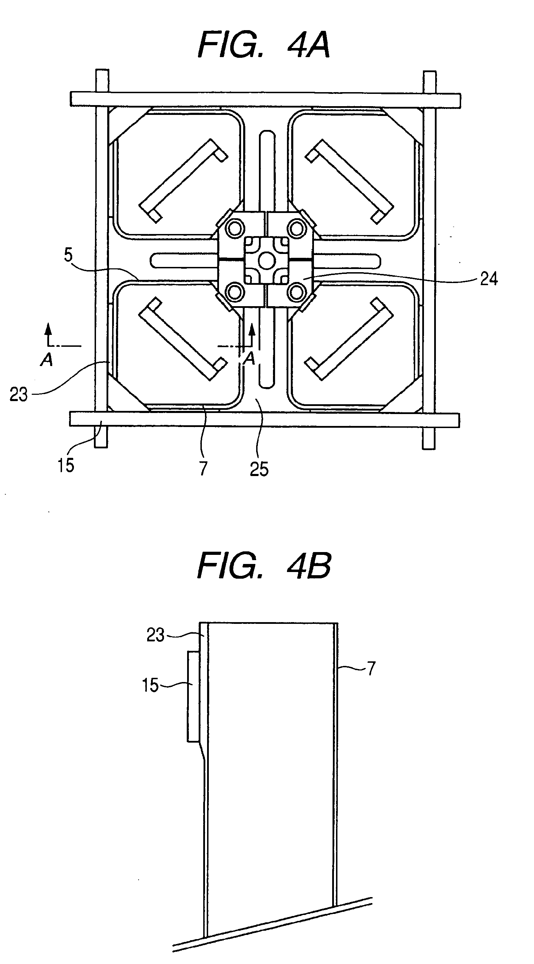

Four fuel assemblies 5 are arranged in one lattice formed by the upper lattice plate 15 as shown in FIG. 4A. Each of the fuel assemblies 5 has a channel box 7. Each of the fuel assemblies 5 is pressed to the upper lattice plate 15 by a channel fastener 24 installed at the upper end portion of each of the fuel assemblies 5. Therefore, each of the channel boxes 7 makes contact with the upper lattice plate 15. A gap water region 25 (refer to FIGs. 1A and 4A) where cooling water which is saturated water flows is formed between the adjacent fuel assemblies. In the present embodiment, as described previously, since the saturated water region is increased, the width of each of the gap water regions 25 is wider than that of the core of the existing BWR/5. Therefore, so as to hold the upper end portion of each of the fuel assemblies 5 by the upper lattice plate 15 of the existing BWR/5, in each of the channel boxes 7, at the upper end portions of the two side walls in contact with the upper lattice plate 15, thick parts 23 are formed (see FIG.4B). The thickness of the thick part 23 is larger than that of the other part of the channel box 7. By formation of the thick part 23, the upper end portion of the fuel assembly 5 can be held by the upper lattice plate 15 of the existing BWR/5.

In the fuel assemblies 5, as shown in FIG. 1A, a plurality of fuel rods 6 are arranged in 12 rows and 12 columns in the channel box 7. Lower end portions of these fuel rods 6 are held by the lower tie-plate (not shown) of the fuel assembly and upper end portions of these fuel rods 6 are held by the upper tie-plate (not shown) of the fuel assembly. The outside diameter of the fuel rods 6 is 9.3 mm and the pitch of the fuel rods 6 is 10.8 mm. The fuel rods are arranged in a square lattice shape. The water rod 8 is arranged at the central part of the transverse section of each of the fuel assemblies 5. The upper end portion and lower end portion of the water rod 8 are also held by the upper tie-plate and the lower tie-plate. The water rod 8 has a cross-shaped transverse section and occupies the region where 12 fuel rods can be arranged. The fuel rods 6 are arranged around the water rod 8. A plurality of fuel spacers (not shown) arranged in the axial direction of the fuel assemblies 5 keep the mutual gaps of the fuel rods 6 at a predetermined interval. The fuel spaces are high pressure loss fuel spacers and have a lattice member made of a zirconium alloy (for example, zircalloy) and a spring member (for example, made of Inconel) for pressing the fuel rods 6. Each of the fuel rods 6 is inserted into each lattice formed in the lattice member thereof and is pressed toward the lattice member by the spring member.

One fuel assembly lattice is a region surrounded by the four sides connecting the intermediate points of the gap water region 25 and includes the fuel assemblies 5 and the region 1/2 times of the width of the gap water region 25 surrounding the periphery of the fuel assembly 5. This gap water region 25 is the aforementioned saturated water region in the peripheral part and the part of the water rod 8 is the aforementioned saturated water region at the central part. Between the water rod 8 and the channel box 7, a fuel rod lattice region in which the fuel rods 6 are arranged is formed.

The channel box 7 is a Thick/Thin channel box having thick corners. The thick corner portions are not shown in FIG. 1A, though so as to keep the flow rate of cooling water in the channel box 7 constant, the thick corner portions are projected outward. The corner portions are projected outward on a level not to adversely affect the operation of the control rods 11. The mean thickness of the channel box 7 is 2.6 mm and the inner width of the channel box 7 is 131.5 mm. The ratio of the inner width of the channel box 7 to the width of the fuel assembly lattice is 0.863. Such a constitution of the channel box 7 is not limited to the present embodiment and can be applied to other embodiments. If the mean thickness is 2.6 mm, in place of the Thick/Thin channel box, a channel box having a substantially uniform thickness may be used.

By referring to FIGs. 1A and 1B, the fuel rods 6 arranged in the fuel rod lattice region in the channel box 7 will be explained. The fuel rods 6 include fuel rods 6A, 6B, 6C, 6D, and 6E including uranium but not including gadolinium of burnable poison and fuel rods 6F, 6G, and 6H including uranium and gadolinium. The fuel rods 6A to 6D and 6F to 6H have an active fuel length of 381 cm. The fuel rod 6E is a partial length fuel rod having an active fuel length of 183 cm. The fuel rods 6A to 6D and 6F have a first region from the lower end of the active fuel length to the position of 96.6% of the active fuel length and a second region from the upper end of the first region to the upper end of the active fuel length. In the fuel rods 6G and 6H, the first region is divided into a 1A region from the lower end of the active fuel length to the position of 48.0% of the active fuel length and a 1B region from the upper end of the 1A region to the upper end of the first region. One fuel rod 6D, in a first layer from an outermost periphery, is arranged in a corner portion facing the control rod 11. In the fuel rod 6D, the first region has an uranium enrichment of 2.5 wt% and the second region has an uranium enrichment of 1.0 wt%. In two fuel rods 6C arranged in the neighborhood of the fuel rod 6D in the first layer, the first region has an uranium enrichment of 3.5 wt% and the second region has an uranium enrichment of 2.0 wt%. Five fuel rods 6B are arranged in the first layer from the outermost periphery, adjoin the fuel rods 6C in the corner portion facing the control rods 11, and are arranged also in the other three corner portions. In the fuel rods 6B, the first region has an uranium enrichment of 4.0 wt% and the second region has an uranium enrichment of 1.0 wt%. 16 fuel rods 6E having an uranium enrichment of 4.9 wt% are arranged at the central portion of each side of the first layer and in the corners of the second layer from the outermost periphery and furthermore are arranged in the neighborhood of the water rod 8. 8 fuel rods 6F are arranged in the neighborhood of the water rod 8. In the fuel rods 6F, the first region has an uranium enrichment of 4.9 wt% and a gadolinium concentration of 8.0% and the second region has an uranium enrichment of 2.0 wt% and a gadolinium concentration of 2.5%. The 1A region of two fuel rods 6G in the neighborhood of the fuel rods 6B arranged in the second layer has an uranium enrichment of 4.9 wt% and a gadolinium concentration of 9.5%. The 1B region of the fuel rods 6G has an uranium enrichment of 4.9 wt% and a gadolinium concentration of 0%. The second region of the fuel rods 6G has an uranium enrichment of 2.0 wt% and a gadolinium concentration of 0%. The 1A region of six fuel rods 6H arranged in the first layer has an uranium enrichment of 4.9 wt% and a gadolinium concentration of 10.0%. The 1B region of the fuel rods 6H has an uranium enrichment of 4.9 wt% and a gadolinium concentration of 11.0%. The second region of the fuel rods 6H has an uranium enrichment of 2.0 wt% and a gadolinium concentration of 2.5%. The remaining 92 rods are the fuel rods 6A. In the fuel rods 6A, the first region has an uranium enrichment of 4.9 wt% and the second region has an uranium enrichment of 2.0 wt%.

In a region from the lower end of the active fuel length to the position of 48.0% of the active fuel length, 132 fuel rods 6 are arranged. In a region above the concerned region, 116 fuel rods 6 are arranged. In the fuel rods 6B, 5C, and 6D arranged in the corner portion where the power is increased locally at an early stage of burn-up, the uranium enrichment is 4.0 wt% or less. In the other fuel rods 6, the uranium enrichment is 4.9 wt%. Further, the fuel rods 6G and 6H in the neighborhood of the channel box 7 in which the power is apt to increase at an early stage of burn-up include burnable poison, thereby suppress local power peaking at an early stage of burnup. The mean uranium enrichment of the fuel assemblies 5 in the transverse section is 4.73 wt%. The uranium weight included in the unit volume of the core region is 2.4 kg/l. The radius of the circle circumscribing the reactor core 10 is 2.6 m. The power density is 58.5 kW/l and the specific power is 24.1 MW/t.

In the reactor core 10 loading the fuel assemblies 5, when the number of exchanging fuel assemblies 5 for each operation cycle is set to 380, under the condition of a discharged burnup of 45 GWd/t and a continuous operation term of 30.5 months, the reactor power can be increased from that of the current BWR/5 by 20%.

In the present embodiment, the mean thickness of the channel box 7 is 2.6 mm, so that at time of the increase power output, the creep deformation of the channel box 7 directed outward is suppressed. Therefore, even in the core 10 in which the uranium weight included in the unit volume of the core region is 2.4 kg/l, at time of the increase power output, the flow rate distribution of the cooling water in the fuel rod lattice region in the fuel assemblies 5 is made more uniform and the cooling of each of the fuel rods 6 can be made uniform. Particularly, the fuel assemblies 5, compared with the lattice member made of Inconel of the low pressure loss fuel spacer, use the high pressure loss fuel spacer using the thick lattice member made of zircalloy, though the aforementioned creep deformation of the channel box 7 can be suppressed. Further, at time of the increase power output, the fuel assemblies 5 can be prevented from isolation.

In the present embodiment, since the mean thickness of the channel box 7 is 2.6 mm, the high pressure loss fuel spacer the pressure loss of which is larger than that of the low pressure loss fuel spacer can be used. By application of the high pressure loss fuel spacer, the use efficiency of neutrons can be enhanced. Furthermore, the surface dose rate of the pipe through which the primary cooling water flows can be reduced. Although these effects cannot be obtained, in place of the high pressure loss fuel spacer, the low pressure loss fuel spacer can be used. In the present embodiment, even when the low pressure loss fuel spacer is used, the increase power output of the nuclear reactor can be realized, and the cooling of each of the fuel rods 6 can be made more uniform, and the fuel assemblies 5 can be prevented from isolation.

### [Embodiment 2]

The BWR core of Embodiment 2 which is another embodiment of the present invention will be explained. The present embodiment is an example that the increase power output of Embodiment 1 is improved more.

The electric power in the present embodiment is increased to 1419 MWe from Embodiment 1. The increase in the electric power can be realized by changing the control rod pattern of Embodiment 1 and increasing the reactor power. The structure of the horizontal section of the core of the present embodiment is the same as that of the horizontal section shown in FIG. 3. The structure of the horizontal section of the fuel assembly lattice of the core of the present embodiment is the same as the structure shown in FIG. 1A. The fuel assemblies 5 composing the core 10 of the present embodiment have the structure of the transverse section shown in FIG. 1A and include the fuel rods 6 having the enrichment distribution and gadolinium concentration distribution which are shown in FIG. 1B. However, the mean thickness of the channel box 7 is 2.65 mm. The radius of the circle circumscribing the core 10 of the present embodiment is 2.6 m. The power density is 62.8 kW/l and the specific power is 25.9 MW/t.

In the core 10 loading the fuel assemblies 5 having a channel box with a mean thickness of 2.65 mm, when the number of exchanging fuel assemblies 5 for each operation cycle is set to 380, under the condition of a discharged burnup of 44 GWd/t and a continuous operation term of 27.8 months, the nuclear reactor power can be improved from that of the current BWR/5 by 29%.

Also in the present embodiment, the effects of further uniformity of cooling of the fuel rods and prevention of isolation of the fuel assemblies 5 which are obtained in Embodiment 1 can be obtained. Further, in the present embodiment, the high pressure loss fuel spacer the pressure loss of which is larger than that of the low pressure loss fuel spacer can be used, so that the use efficiency of neutrons can be increased. Furthermore, the surface dose rate of the pipe through which the primary cooling water flows can be reduced.

### [Embodiment 3]

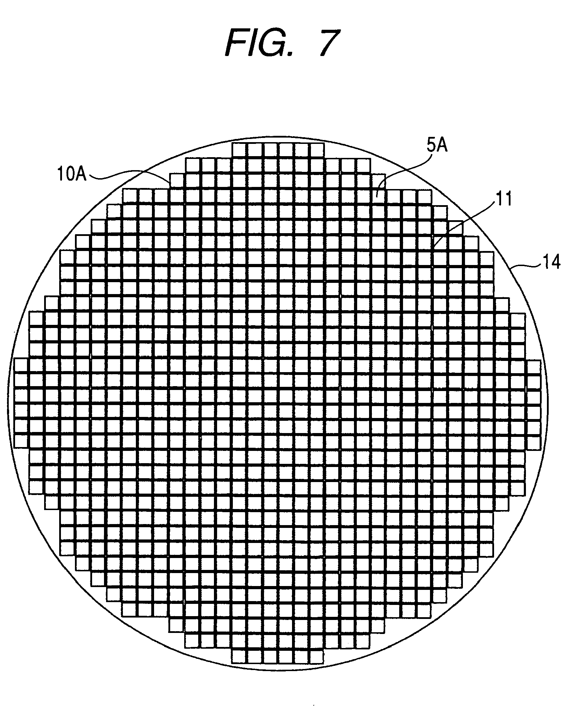

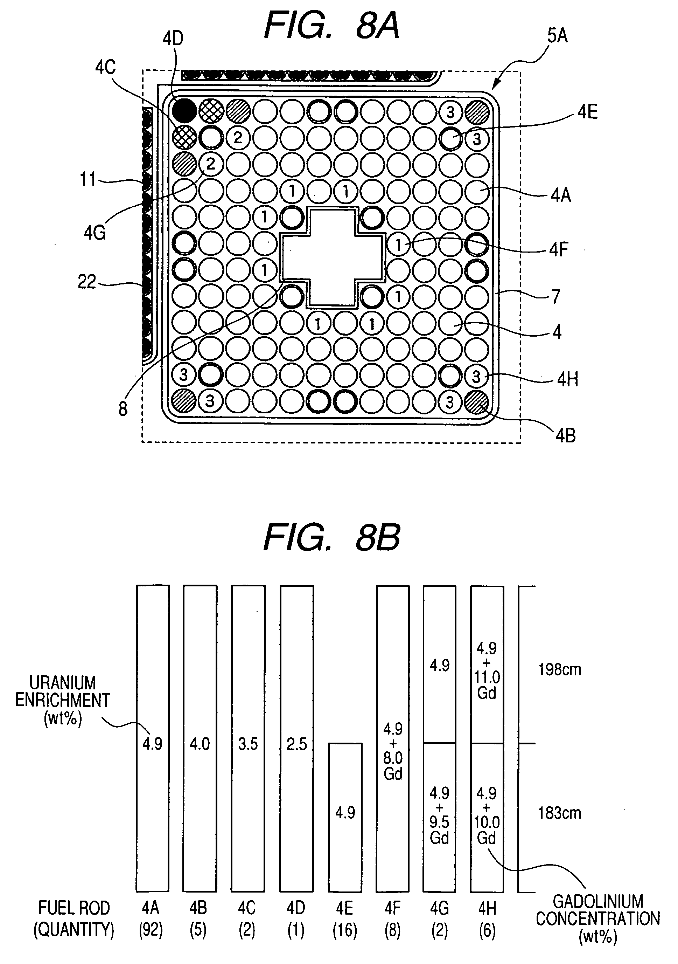

The BWR core of Embodiment 3 which is still another embodiment of the present invention will be explained below by referring to FIGs. 7, 8A and 8B. The present embodiment is a BWR core applied to an ABWR (advanced boiling water reactor). The electric power of the present embodiment is 1559 MWe. The ABWR, in the structure of the nuclear reactor shown in FIG. 2, has a structure that the jet pumps 17 are exchanged with internal pumps. The cooling water is supplied to the core by the internal pumps. A core 10A of the present embodiment has 872 fuel assemblies 5A and 205 control rods 11 inserted between the adjacent fuel assemblies 5A. In the fuel assemblies 5A, fuel rods 4 with an outside diameter of 9.3 mm are arranged in 12 rows and 12 columns at a pitch of 10.8 mm around the water rod 8. The channel box 7 for surrounding these fuel rods 4 is a Thick/Thin channel box having a mean thickness of 2.6 mm and an inner width of 131.5 mm. The ratio of the inner width of the channel box 7 to the width of the fuel assembly lattice is 0.849. If the mean thickness is 2.6 mm, also in the present embodiment, a channel box having a substantially uniform thickness may be used in place of the Thick/Thin channel box. In the core 10A, the ratio of the number of fuel assemblies 5A loaded in the core 10A to the number of control rods 11 installed in the nuclear reactor is 4.25 (= 872/205).

By referring to FIGs. 8A and 8B, the fuel rods 4 arranged in the fuel rod lattice region in the channel box 7 will be explained. The fuel rods 4 include fuel rods 4A, 4B, 4C, 4D, and 4E including uranium but not including gadolinium of burnable poison and fuel rods 4F, 4G, and 4H including uranium and gadolinium. The fuel rods 4A to 4D and 4F to 4H have an active fuel length of 381 cm. The fuel rod 4E is a partial length fuel rod having an active fuel length of 183 cm. The arrangements of the fuel rods 4A to 4H in the channel boxes 7 are the same as the arrangements of the fuel rods 6A to 6H in Embodiment 1, respectively. The fuel rods 4G and 4H, in the axial direction, form a first region from a lower end of the active fuel length to the position of 48.0% of the active fuel length and a second region from an upper end of the first region to an upper end of the active fuel length. The fuel rods 4A to 4F form one region through the active fuel length.

The uranium enrichment of the fuel rod 4A is 4.9 wt% and the uranium enrichment of the fuel rod 4B is 4.0 wt%. The uranium enrichment of the fuel rod 4C is 3.5 wt%, and the uranium enrichment of the fuel rod 4D is 2.5 wt%, and the uranium enrichment of the fuel rod 4E is 4.9 wt%. The fuel rod 4F has an uranium enrichment of 4.9 wt% and a gadolinium concentration of 8.0%. The fuel rod 4G has the first region with an uranium enrichment of 4.9 wt% and a gadolinium concentration of 9.5% and the second region with an uranium enrichment of 4.9 wt% and a gadolinium concentration of 0%. The fuel rod 4H has the first region with an uranium enrichment of 4.9 wt% and a gadolinium concentration of 10.0% and the second region with an uranium enrichment of 4.9 wt% and a gadolinium concentration of 11.0%.

In the region from the lower end of the active fuel length to the position of 48.0% of the fuel effective length, 132 fuel rods 4 are arranged. In the region above the concerned region, 116 fuel rods 4 are arranged. The mean uranium enrichment of the fuel assemblies 5A is 4.82 wt%. The uranium weight included in the unit volume of the core region is 2.3 kg/l. The radius of the circle circumscribing the core 10A is 2.7 m. The power density is 56.4 kW/l and the specific power is 24.1 MW/t.

In the core 10A loading the fuel assemblies 5A, when the number of exchanging fuel assemblies 5A for each operation cycle is set to 436, under the condition of a discharged burnup of 46 GWd/t and a continuous operation term of 31.4 months, the reactor power can be improved from that of the current ABWR by 15%.

In the present embodiment, the mean thickness of the channel box 7 is 2.6 mm, so that at time of the increase power output, the creep deformation of the channel box 7 directed outward is suppressed. Therefore, even in the core 10A in which the uranium weight included in the unit volume of the core region is 2.3 kg/l, at time of the increase power output, the cooling of each of the fuel rods 6 in the fuel assemblies 5A can be made more uniform. Particularly, the fuel assemblies 5A use the high pressure loss fuel spacer using the lattice member made of zircalloy, though the aforementioned creep deformation of the channel box 7 can be suppressed. Further, at time of the increase power output, the fuel assemblies 5 can be prevented from isolation. In the present embodiment, the high pressure loss fuel spacer is used, so that the use efficiency of neutrons can be increased and furthermore, the surface dose rate of the pipe through which the primary cooling water flows can be reduced. In the present embodiment, the low pressure loss fuel spacer may be used in place of the high pressure loss fuel spacer.

### [Embodiment 4]

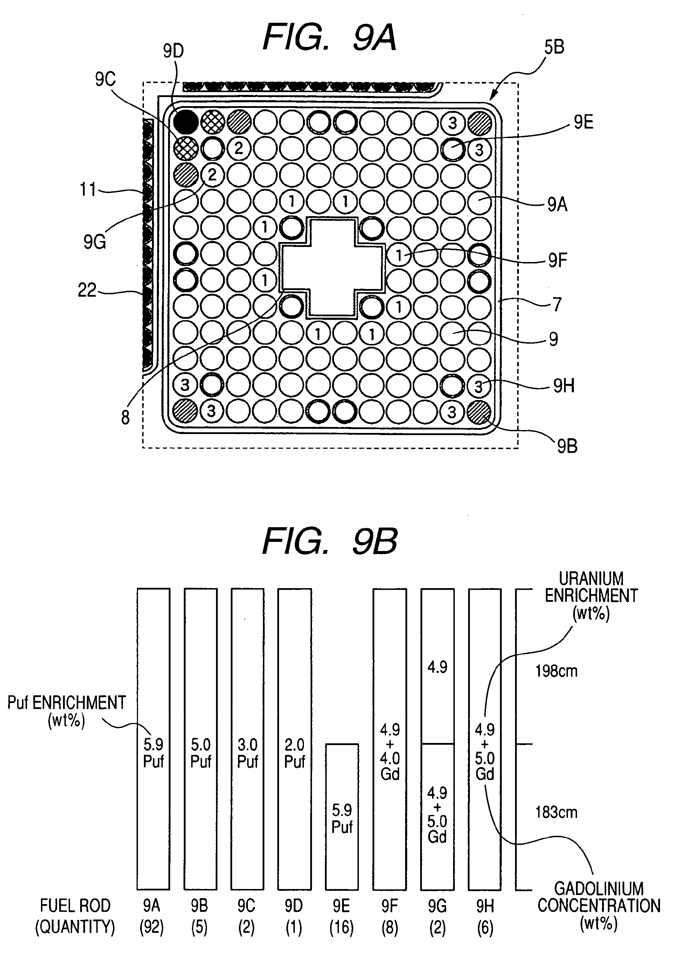

The BWR core of Embodiment 4 which is another embodiment of the present invention will be explained below by referring to FIGs. 7, 9A and 9B. The present embodiment, similarly to Embodiment 3, is a BWR core applied to the ABWR. The electric power of the present embodiment is also 1559 MWe. The ABWR to which the core of the present embodiment is applied has the same structure as that of Embodiment 3. The core 10A of the present embodiment has 872 fuel assemblies 5B (refer to FIG. 9A) and 205 control rods 11 inserted between the adjacent fuel assemblies 5B. The fuel assemblies 5B used in the present embodiment, unlike the fuel assemblies 5A, as a nuclear fuel material, use mixed oxide fuel in which fissile plutonium (hereinafter, referred to as Puf) is enriched in deteriorated uranium. The deteriorated uranium is generated as a residual substance during manufacture of enriched uranium. Puf is obtained by reprocessing spent fuel assemblies.

In the fuel assemblies 5B, fuel rods 9 with an outside diameter of 9.3 mm are arranged in 12 rows and 12 columns at a pitch of 10.8 mm around the water rod 8. The channel box 7 for surrounding the fuel rods 9 is a Thick/Thin channel box having a mean thickness of 2.6 mm and an inner width of 131.5 mm. The ratio of the inner width of the channel box 7 to the width of the fuel assembly lattice is 0.849. If the mean thickness is 2.6 mm, also in the present embodiment, a channel box having a uniform thickness may be used in place of the Thick/Thin channel box.

By referring to FIGs. 9A and 9B, the fuel rods 9 arranged in the fuel rod lattice region in the channel box 7 will be explained. The fuel rods 9 include fuel rods 9A, 9B, 9C, 9D, and 9E including mixed oxide fuel but not including gadolinium of burnable poison. Fuel rods 9F, 9G, and 9H including uranium and gadolinium. The fuel rods 9A to 9D and 9F to 9H have an active fuel length of 381 cm. The fuel rod 9E is a partial length fuel rod having an active fuel length of 183 cm. The arrangements of the fuel rods 9A to 9H in the channel boxes 7 are the same as the arrangements of the fuel rods 6A to 6H in Embodiment 1. The fuel rod 9G, in the axial direction, forms a first region from a lower end of the active fuel length to the position of 48.0% of the active fuel length and a second region from an upper end of the first region to an upper end of the active fuel length. The fuel rods 9A to 9F and 9H form one region through the active fuel length.

The Puf enrichment of 92 fuel rods 9A is 5.9 wt% and the Puf enrichment of 5 fuel rods 9B is 5.0 wt%. The Puf enrichment of 2 fuel rods 9C is 3.0 wt% and the Puf enrichment of one fuel rod 9D is 2.0 wt%. The Puf enrichment of 16 fuel rods 9E is 5.9 wt%. 8 fuel rods 9F have an uranium enrichment of 4.9 wt% and a gadolinium concentration of 4.0%. 2 fuel rods 9G have the first region with an uranium enrichment of 4.9 wt% and a gadolinium concentration of 5.0% and the second region with an uranium enrichment of 4.9 wt% and a gadolinium concentration of 0%. 6 fuel rods 9H include an uranium enrichment of 4.9 wt% and a gadolinium concentration of 5.0%.

In the region from the lower end of the active fuel length to the position of 48.0% of the active fuel length, 132 fuel rods 9 are arranged. In the region above the concerned region, 116 fuel rods 9 are arranged. The mean Puf enrichment of the fuel assemblies is 5.02 wt%. The total weight of uranium and plutonium included in the unit volume of the core region is 2.3 kg/l. The radius of the circle circumscribing the core 10A of the present embodiment is 2.7 m. The power density is 56.4 kW/l and the specific power is 24.1 MW/t.

In the reactor core 10A loading the fuel assemblies 5A, when the number of exchanging fuel assemblies 5A for each operation cycle is set to 436, under the condition of a discharged burnup of 46 GWd/t and a continuous operation term of 31.4 months, the reactor power can be improved from that of the current ABWR by 15%. In the present embodiment, the effects produced in Embodiment 3 can be obtained.

The effects of the present invention are not limited to the fuel assemblies and core indicated in each of the embodiments aforementioned and even if the concept of the present invention is applied to a core for loading a different number of fuel assemblies, the effects of the present invention can be obtained similarly. Further, even if fuel assemblies having the blanket region made up of deteriorated uranium, natural uranium, and low enriched uranium at the upper and lower end portions of the fuel region are adopted, the similar effects can be obtained. Furthermore, the same may be said with the case that fuel assemblies have a plurality of fuel rods different in length.

## Claims

1. A core (10) of a boiling water reactor as a burner type core of the boiling water reactor having a ratio of 3 or more of number of fuel assemblies (5) loaded in said core (10) to number of control rods (11) installed in said nuclear reactor and using an oxide of low enriched uranium having a mean enrichment of said fuel assemblies of 3 wt% to 8 wt% or a mixed oxide having a mean fissile plutonium enrichment of said fuel assemblies of 2 wt% to less than 7 wt%,
wherein a mean weigth of at least one of uranium and plutonium included in a unit volume of a core region is 2.25 to 3.4 kg/l when load of the fuel assemblies (5) having a burnup of 0 into the core (10) is finished, and
a mean thickness of a channel box (7) of said fuel assemblies (5) is 2.10 to 3.55 mm.

2. The core (10) of the boiling water reactor according to claim 1,
wherein mean specific power of said core (10) is within a range from 21 MW/t to 26 MW/t through an operation cycle.

3. A core (10) of a boiling water reactor as a burner type core of the boiling water reactor having a ratio of 3 or more of number of fuel assemblies (5) loaded in said core (10) to number of control rods (11) installed in said nuclear reactor and using an oxide of low enriched uranium having a mean enrichment of said fuel assemblies (5) of 3 wt% to 8 wt% or a mixed oxide having a mean fissile plutonium enrichment of said fuel assemblies (5) of 2 wt% to less than 7 wt%,
wherein a ratio of an inner width of a channel box (7) of said fuel assemblies (5) to a width of said fuel assembly lattice is 0.79 to 0.865, and
a mean thickness of said channel box (7) of said fuel assemblies (5) is 2.10 to 3.55 mm.

4. The core (10) of the boiling water reactor according to claim 1 or 3,
wherein a mean power density of said core (10) is within a range from 52 kW/l to less than 63 kW/l through an operation cycle.

5. The core (10) of the boiling water reactor according to claim 3 or 4,
wherein mean specific power of said core (10) is within a range from 21 MW/t to 26 MW/t through an operation cycle.

6. The core (10) of the boiling water reactor according to claim 1, 2, 3, 4 or 5,
wherein a mean thickness of said channel box (7) of said fuel assemblies (5) is 2.55 to 3.55 mm.

7. The core (10) of the boiling water reactor according to at least one of claims 1 to 5,
wherein said channel box (7) is a square cylindrical channel box, and a thickness of each corner portion (23) of said square cylindrical channel box (7) is thicker than a thickness of a wall for connecting between said adjacent corner portions (23).
